# EUROPÄISCHE PATENTANMELDUNG

(11) **EP 1 188 621 A2**
(43) Veröffentlichungstag der Anmeldung: **20.03.2002**
(21) Anmeldenummer: 01117280.6
(22) Anmeldetag: 18.07.2001
(51) Int. Cl.: B60R 21/06

(54) **Vorrichtung zur Festlegung eines Endbereiches einer Fahrzeug-Sicherheitseinrichtung an einem fahrzeugseitigen Befestigungspunkt sowie zur Spannung des Endbereiches der Fahrzeug-Sicherheitseinrichtung relativ zu dem Befestigungspunkt**

(30) Priorität: 15.09.2000 DE 10046142
(71) Anmelder: PETER BUTZ GmbH & Co Verwaltungs-KG, 40764 Langenfeld (DE)
(72) Erfinder: Crisp, Terence Sam, 3140 Keerbergen (BE)
(74) Vertreter: Patentanwälte Ostriga & Sonnet

(57) **Zusammenfassung**

Beschrieben und dargestellt ist eine Vorrichtung (10) zur Festlegung eines Endbereiches (60) einer Fahrzeug-Sicherheitseinrichtung (11) an einem fahrzeugseitigen Befestigungspunkt (19), sowie zur Spannung des Endbereiches (60) der Fahrzeug-Sicherheitseinrichtung (11) relativ zu dem Befestigungspunkt (19), mit einem ersten Teil (21) zur Verbindung mit der Fahrzeug-Sicherheitseinrichtung (11), und einem zweiten Teil (22) zur Verbindung mit dem Befestigungspunkt (19), wobei das erste Teil (21) relativ zu dem zweiten Teil (22) entlang einer begrenzten Strecke (B) zwischen einer Ruheposition und einer Arbeitsposition verschiebbar angeordnet ist, wobei die Ruheposition des ersten Teils einem minimalen Abstand und die Arbeitsposition des ersten Teils einem maximalen Abstand zwischen Endbereich (60) und Befestigungspunkt (19) entspricht, wobei zwischen dem ersten Teil (21) und dem zweiten Teil (22) wenigstens ein Federelement (48) angeordnet ist, welches das erste Teil (21) in dessen Ruheposition hin belastet. Die Besonderheit besteht darin, daß zwischen dem ersten Teil (21) und dem zweiten Teil (22) ein Formrichtgesperre (31,41) angeordnet ist, welches mittels eines in Spannrichtung (S) relativ zu dem zweiten Teil (22) bewegbaren Betätigungsgliedes (51) in seine Freilaufstellung versetzbar ist.

## Beschreibung

Die Erfindung betrifft eine Vorrichtung gemäß dem Oberbegriff des Anspruches 1.

Bei der Fahrzeug-Sicherheitseinrichtung kann es sich beispielsweise um ein Sicherheitsnetz handeln, welches zur Abtrennung eines Laderaums in einem Kombi-Kfz von einem Fahrgastraum vorgesehen ist. Es kann sich aber auch um einen Spanngurt handeln, der im Fahrzeug befindliche Gegenstände, beispielsweise auf den Boden eines Laderaumes eines Kfz aufgelegte Gegenstände, während der Fahrt festhalten soll. Dazu wird ein Spanngurt, beispielsweise einseitig am Laderaumboden befestigt, über den festzulegenden Gegenstand gespannt und an einem anderen Ende gespannt befestigt. Es sind grundsätzlich auch Sicherheitsnetze bekannt, die solche Gegenstände festlegen.

Bei herkömmlichen Fahrzeugsicherheitsnetzen zur Abtrennung eines Fahrgastraumes von einem Laderaum möchte man grundsätzlich verhindern, daß im Laderaum befindliche Gegenstände bei starkem Bremsen in den Fahrgastraum geschleudert werden können. Insbesondere im Falle eines Unfalls, also bei dem Auftreten sehr starker Beschleunigungen, möchte man auch ein Ausbeulen des Sicherheitsnetzes vermeiden, weil bereits durch derartige Ausbeulungen Passagiere verletzt werden können.

Herkömmliche Fahrzeug-Sicherheitsnetze werden beispielsweise im Bereich des Fahrzeug-Himmels in entsprechende Halterungen eingehängt und als Werkstoffbahn von einer Wickelwelle abgezogen. Zur Befestigung an karosserieseitigen Befestigungspunkten können beispielsweise am freien Randbereich des Fahrzeug-Sicherheitsnetzes Vorrichtungen vorgesehen sein, die in karosserieseitig angeordnete Halteösen eingehängt werden. Dabei ist es insbesondere von Bedeutung, daß Fahrzeug-Sicherheitsnetz straff zu halten.

Um im Falle eines Crashes eine Haltevorrichtung für ein Fahrzeug-Sicherheitsnetz zu schaffen, die schnell anspricht, ist bei einer nicht gattungsgemäßen Vorrichtung gemäß DE 198 352 30 A1 eine Klemmeinrichtung vorgesehen. Die Klemmeinrichtung übt auf ein Zugmittel eine Klemmkraft aus, welches unter Ausbildung einer Schlaufe umgeschlagen ist.

Diese Vorrichtung wird angesichts der komplizierten Anordnung des Zugmittels wie auch im Hinblick auf die notwendige Crash-Festigkeit, die dort mittels Klemmkraft erreicht werden soll, als verbesserungswürdig angesehen.

Eine gattungsgemäße Vorrichtung zur Festlegung eines Endbereichs einer Fahrzeug-Sicherheitseinrichtung an einem fahrzeugseitigen Befestigungspunkt sowie zur Spannung des Endbereichs der Fahrzeug-Sicherheitseinrichtung relativ zu dem Befestigungspunkt ist aus der EP 06 42 955 B1 bekannt. Dazu wird insbesondere auf die Fig. 5 und 9 verwiesen, die bereits ein Federelement zeigen, welches zwischen dem ersten und zweiten Teil angeordnet ist.

Nach Festlegen dieses dort dargestellten Fahrzeug-Sicherheitsnetzes an den Befestigungseinrichtungen kann das Netz nachträglich noch gespannt werden, so daß durch die straffe Spannung des Spannelementes und auch des Netzes die gesamte Rückhaltevorrichtung wesentlich straffer und unnachgiebiger wirkt.

Der Erfindung liegt die Aufgabe zugrunde, ausgehend von einer Vorrichtung gemäß dem Oberbegriff des Anspruchs 1, also somit von einer Vorrichtung gemäß der EP 0642 955 B1 eine Vorrichtung zu schaffen, die ein automatisches Nachspannen nach erfolgter Festlegung des Endbereiches der Fahrzeug-Sicherheitseinrichtung an einem fahrzeugseitigen Befestigungspunkt ermöglicht, einfach bedienbar ist, einfach aufgebaut ist und im Falles eines Crashs fehlerfrei anspricht.

Die Erfindung löst diese Aufgabe mit den Merkmalen des Anspruchs 1, insbesondere den des Kennzeichenteils, und ist demgemäß dadurch gekennzeichnet, daß zwischen dem ersten Teil und dem zweiten Teil ein Formrichtgesperre angeordnet ist, welches mittels eines in Spannrichtung relativ zu dem zweiten Teil bewegbaren Betätigungsgliedes in seine Freilaufstellung versetzbar ist.

Das Prinzip der Erfindung besteht im wesentlichen darin, an Stelle der in der Fig. 5 der EP 0642 955 B1 dargestellten Feder, die dort lediglich für eine gewisse Vorspannung sorgt, ein Federelement vorzusehen, welches den Endbereich der Fahrzeug-Sicherheitseinrichtung relativ zu dem Befestigungspunkt spannen kann und zugleich auf Grund der gewählten Anordnung des Formrichtgesperres den Endbereich der Fahrzeug-Sicherheitseinrichtung relativ zu dem fahrzeugseitigen Befestigungspunkt auch automatisch nachspannen kann.

Durch Vorsehen eines bewegbaren Betätigungsgliedes, welches in Spannrichtung relativ zu dem zweiten Teil bewegbar ist und auf diese Weise das Formrichtgesperre in seine Freilaufstellung versetzt, kann ein Benutzer einhändig durch Erfassen des Betätigungsgliedes den Endbereich einer Fahrzeug-Sicherheitseinrichtung an einem fahrzeugseitigen Befestigungspunkt zunächst festlegen. Durch Bewegung des Betätigungsgliedes in Spannrichtung, d.h. im wesentlichen in eine Richtung hin zu dem fahrzeugseitigen Befestigungspunkt, versetzt er das Formrichtgesperre in seine Freilaufstellung, so daß eine Bewegung des ersten Teils relativ zu dem zweiten Teil möglich ist. Während der Festlege-Bewegung des Endbereiches der Fahrzeug-Sicherheitseinrichtung an dem fahrzeugseitigen Befestigungspunkt wird das Federelement gespannt, wodurch eine Rückstellkraft erzeugt wird. Nach Festlegen des Endbereiches der Fahrzeug-Sicherheitseinrichtung an dem fahrzeugseitigen Befestigungspunkt ist das Element gespannt und bestrebt, das erste Teil in dessen Ruheposition hin zurückverlagern, d.h. in eine Position, in der der Abstand zwischen dem Endbereich und dem Befestigungspunkt minimal wird. Auf diese Weise wird eine Spannkraft erzeugt, die dafür sorgt, daß eine einmal festgelegte Fahrzeug-Sicherheitseinrichtung fortlaufend gespannt wird, so daß beispielsweise durch Bewegung eines festgelegten Gegenstandes im Fahrzeug entstehende Schlaffungen oder Bereiche großer Schlaffheit in der Fahrzeug-Sicherheitseinrichtung durch diese Spannung und Verlagerung des ersten Teils relativ zu dem zweiten Teil aufgehoben werden können.

Das Vorsehen eines Formrichtgesperres erhöht dabei im Hinblick auf die im Stand der Technik bekannte Klemmeinrichtung die Crashsicherheit deutlich. An Stelle einer grundsätzlich risikobehafteten Klemmung eines Zugmittels mittels eines Klemmelementes, bei der Oberflächenkontakte des Zugmittels mit dem Klemmelement eine bedeutende Rolle spielen, kann durch ein separates Formrichtgesperre, welches per se zwei miteinander in formschlüssigen Eingriff versetzbare Teile umfaßt, eine absolut fehlerfreie Sperrung der Bewegung zwischen dem ersten und zweiten Teil relativ zueinander erreicht werden.

Unter dem Begriff Spannrichtung wird im wesentlichen der Verlauf einer Geraden verstanden, die sich zwischen einem Endbereich der Fahrzeug-Sicherheitseinrichtung und dem fahrzeugseitigen Befestigungspunkt erstreckt. Die Spannrichtung ist dabei im wesentlichen die Richtung, in der ein Benutzer seine Hand bewegt, um den Endbereich einer Fahrzeug-Sicherheitseinrichtung an einem fahrzeugseitigen Befestigungspunkt festzulegen.

Selbstverständlich ist auch die kinematische Umkehr möglich, d.h. daß erste Teil dient der Verbindung mit dem fahrzeugseitigen Befestigungspunkt und das zweite Teil dient der Verbindung mit dem Endbereich der Fahrzeug-Sicherheitseinrichtung. In dem Fall würde das zweite Teil relativ zu dem ersten Teil gespannt, um ausgehend von dem fahrzeugseitigen Befestigungspunkt ein Befestigungsende an der Fahrzeug-Sicherheitseinrichtung zu erreichen.

Unter Befestigungspunkt im Sinne der Erfindung wird selbstverständlich kein mathematisch idealer Punkt verstanden, sondern eine karosserieseitig feste Befestigungsmöglichkeit, beispielsweise eine Öse oder ein Haken od. dgl. Grundsätzlich kann auch daran gedacht werden, daß zweite Teil unmittelbar mit der Fahrzeugkarosserie dauerhaft zu verbinden. Vorzugsweise handelt es sich bei der Verbindung zwischen dem zweiten Teil und dem fahrzeugseitigen Befestigungspunkt um eine lösbare Verbindung.

Gemäß einer vorteilhaften Ausgestaltung der Erfindung ist das Betätigungsglied an dem zweiten Teil verlagerbar angeordnet. Dies bietet einerseits den Vorteil einer einfachen Montage. Andererseits ist auch die Konstruktion besonders einfach, da hier nun die Möglichkeit besteht, zwischen den Betätigungsgliedern und dem zweiten Teil Federelemente zur Rückstellung des Betätigungsgliedes vorzusehen.

Gemäß einer vorteilhaften Ausgestaltung der Erfindung ist das Betätigungsglied relativ zu dem zweiten Teil federbelastet. Diese Ausführungsform bietet den Vorteil, daß eine Rückstellung des Betätigungsgliedes relativ zu dem zweiten Teil nach Betätigung durch einen Benutzer automatisch erfolgen kann. Ist das Betätigungsglied einmal bewegt worden, um das Formrichtgesperre in seine Freilaufstellung zu versetzen, besteht damit die Möglichkeit, daß das Betätigungslied relativ zu dem zweiten Teil rückverlagert wird und anschließend das Formrichtgesperre in seine Sperrstellung versetzbar ist. Die Rückversetzung des Formrichtgesperres in seine Sperrstellung kann dabei ebenfalls automatisch erfolgen.

Gemäß einer weiteren vorteilhaften Ausgestaltung der Erfindung sind Führungsmittel für eine geführte Bewegung des ersten Teils relativ zu dem zweiten Teil vorgesehen. Derartige Führungsmittel bieten die Möglichkeit, die Relativbewegung des ersten Teils relativ zu dem zweiten Teil sicher zu definieren, so daß Fehlfunktionen ausgeschlossen sind. Außerdem bieten sich auch hier Möglichkeiten einer einfachen Montage.

Gemäß einer weiteren besonderen Ausgestaltung der Erfindung umfassen die Führungsmittel Führungsnuten. An einem der beiden ersten und zweiten Teile angeordnete Führungsnuten können das jeweils andere Teil sicher führen. Es handelt sich dabei beispielsweise um eine Art Schienen-Führung. Auf diese Weise können die ersten und zweiten Teile unverlierbar aneinander angeordnet sein.

Gemäß einer vorteilhaften Ausgestaltung der Erfindung umfaßt das Formrichtgesperre eine Verzahnung und eine Sperrklinke zum Eingriff in die Verzahnung. Diese Ausbildung ermöglicht eine besonders große Crash-Sicherheit, da hier durch formschlüssigen Eingriff von Sperrklinke und Verzahnung eine ungewollte Verlagerung des ersten Teils relativ zum zweiten Teil und damit eine entsprechende Verlagerung der Fahrzeug-Sicherheitseinrichtung ausgeschlossen ist. Außerdem bietet sich hier der Vorteil, bei einer Verzahnung unterschiedlich steile Flanken vorzusehen, so daß eine Bewegung des ersten Teils relativ zu dem zweiten Teil in Richtung in die Ruheposition des ersten Teils möglich ist, die entgegengesetzte Bewegung jedoch gesperrt ist.

Gemäß einer vorteilhaften Ausgestaltung der Erfindung ist die Sperrklinke schwenkbar am zweiten Teil angeordnet. Dies bietet konstruktionstechnische Vorteile, da nunmehr insbesondere die Möglichkeit besteht, mittels des Betätigungsgliedes die Sperrklinke zu verschwenken. Außerdem bietet sich hierdurch die Möglichkeit, Federelemente sowohl für die Rückstellung des Betätigungsgliedes wie auch für die Rückstellung der Sperrklinke an dem zweiten Teil anzuordnen.

Gemäß einer weiteren besonders vorteilhaften Ausgestaltung der Erfindung weist die Sperrklinke eine Betätigungsfläche auf, mittels der die Sperrklinke von einem Betätigungsglied verschwenkbar ist. Dies bietet den Vorteil, daß die Sperrklinke nun unmittelbar von dem Betätigungsglied verschwenkbar sein kann, so daß eine einfache Konstruktion und eine Montage mit geringem Montageaufwand möglich ist.

Gemäß einer vorteilhaften Ausgestaltung der Erfindung ist die Sperrklinke in ihre Sperrstellung hinein federbelastet. Dies bietet den Vorteil, daß die Crash-Sicherheit weiter erhöht wird, insbesondere weil die Sperrklinke nunmehr ständig an der Verzahnung anliegen kann und Fehlfunktionen dadurch ausgeschlossen werden.

Gemäß einer weiteren vorteilhaften Ausgestaltung der Erfindung ist das erste Teil bzw. das zweite Teil jeweils mit einer Ausnehmung für den Einsatz eines Federelementes ausgestattet. Diese Anordnung bietet den Vorteil besonders einfacher Montage, da die Federelemente nunmehr direkt in die Ausnehmungen in dem ersten Teil bzw. in dem zweiten Teil eingesetzt werden können. Zusätzlich bietet sich hier die Möglichkeit, eine Druckfeder vorzusehen, die besonders große Federkräfte aufnehmen kann.

Gemäß einer weiteren vorteilhaften Ausgestaltung der Erfindung ist die Vorrichtung entlang ihrer Längsmittelachse im wesentlichen spiegelsymmetrisch ausgebildet und weist zwei Federelemente auf. Diese Ausbildung bietet den Vorteil besonders großer, von den Federelementen aufgebrachter Spannkräfte.

Weitere Vorteile der Erfindung ergeben sich aus der nachfolgenden Beschreibung eines in den Zeichnungen dargestellten Ausführungsbeispiels. Darin zeigen:
- Fig. 1: schematisch in Ansicht eine als Kfz-Sicherheitsnetz ausgebildete Fahrzeug-Sicherheitseinrichtung mit der erfindungsgemäßen Vorrichtung,
- Fig.2: in schematischer Ansicht das erste Teil der erfindungsgemäßen Vorrichtung in Einzeldarstellung,
- Fig. 3: das erste Teil der Vorrichtung gemäß Ansichtspfeil III in Fig. 2,
- Fig. 4: in schematischer Ansicht das zweite Teil der erfindungsgemäßen Vorrichtung in Einzeldarstellung,
- Fig. 5: das zweite Teil der Vorrichtung gemäß Ansichtspfeil V in Fig. 4
- Fig. 6: die erfindungsgemäße Vorrichtung aus erstem und zweitem Teil in zusammengebauten Zustand sowie mit eingesetztem Federelement, jedoch ohne Betätigungsglied,
- die Fig. 7 bis 9: die zusammengebaute Vorrichtung gemäß Schnittlinie VII-VII in Fig. 10 in verschiedenen Betriebszuständen, mit dargestelltem Betätigungsglied, und
- Fig. 10: in einer schematischen Darstellung gemäß Fig. 6 die erfindungsgemäße Vorrichtung, jedoch mit Betätigungsglied.

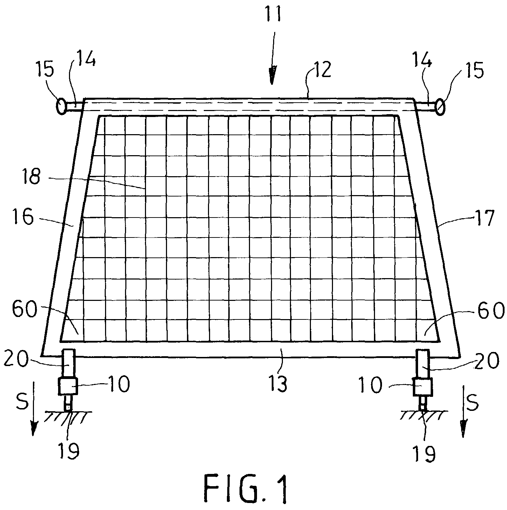

Fig. 1 zeigt schematisch ein Sicherheitsnetz 11, wie es üblicherweise einen Fahrgastraum eines Kombi-PKW von einem Laderaum trennt. Das Sicherheitsnetz weist eine obere Kante 12, eine untere Kante 13 sowie Seitenränder 16 und 17 auf. Die vier Kantenbereiche bzw. Ränder 12, 13, 16, 17 begrenzen eine Werkstoffbahn 18, die beim Ausführungsbeispiel gemäß Fig. 1 eine netzartige Werkstoffbahn 18 ist.

Grundsätzlich kann es sich bei der Fahrzeug-Sicherheitseinrichtung, die gemäß Fig. 1 als Sicherheitsnetz 11 ausgebildet ist, jedoch auch um einen nicht dargestellten Spanngurt handeln, der Ladungen festlegt bzw. auch um ein Flächengebilde, also beispielsweise auch um ein Sicherheitsnetz, welches beispielsweise im Bodenbereich eines Laderaums in einem Fahrzeug angeordnet ist, um festzulegende Gegenstände zu überspannen und festzulegen.

Das gemäß Fig. 1 dargestellte Sicherheitsnetz 11 weist im Bereich seiner oberen Kante 12 eine obere Stange 14 auf, die mittels zweier Einhängeenden 15 in nicht dargestellte karosserieseitige Halterungen, beispielsweise im Bereich eines Kfz-Himmels eingehängt wird. Im Bereich der oberen Kante 12 kann auch eine nicht dargestellte Wickelvorrichtung angeordnet sein, auf der die Werkstoffbahn 18 aufwickelbar ist.

Im Bereich der unteren Kante 13 des Sicherheitsnetzes 11 kann ebenfalls eine nicht dargestellte untere Stange vorgesehen sein. Beim Ausführungsbeispiel gemäß Fig. 1 erstrecken sich von den Eckbereichen der unteren Kante 13 jeweils Gurtansätze 20 nach unten. An diese schließen sich erfindungsgemäße Vorrichtungen 10 zur Festlegung an einen fahrzeugseitig liegenden Befestigungspunkt 19 an. In Fig. 1 wurde der fahrzeugseitige Befestigungspunkt 19 schematisch angedeutet. Es ist selbstverständlich, daß der Befestigungspunkt 19 kein ideeller Punkt ist, sondern sich beispielsweise nach Art einer Befestigungsöse, eines Befestigungsringes, eines Befestigungshakens oder ggfls. räumlich erstrecken kann.

Derartige Gurtansätze 20 sind grundsätzlich jedoch entbehrlich. Die erfindungsgemäße Vorrichtung 10 kann auch unmittelbar mit einem Endbereich 60 des Sicherheitsnetzes verbunden sein.

Das bezüglich Fig. 1 untere freie Ende der Sicherheits-Einrichtung 11 wird als Endbereich 60 bezeichnet. Dieser Endbereich 60 befindet sich vorzugsweise in den Eckbereichen des Sicherheitsnetzes 11. Grundsätzlich ist es aber auch denkbar, daß Sicherheisnetz 11 beispielsweise mittig oder auch im Bereich der Seitenränder 16, 17 festzulegen.

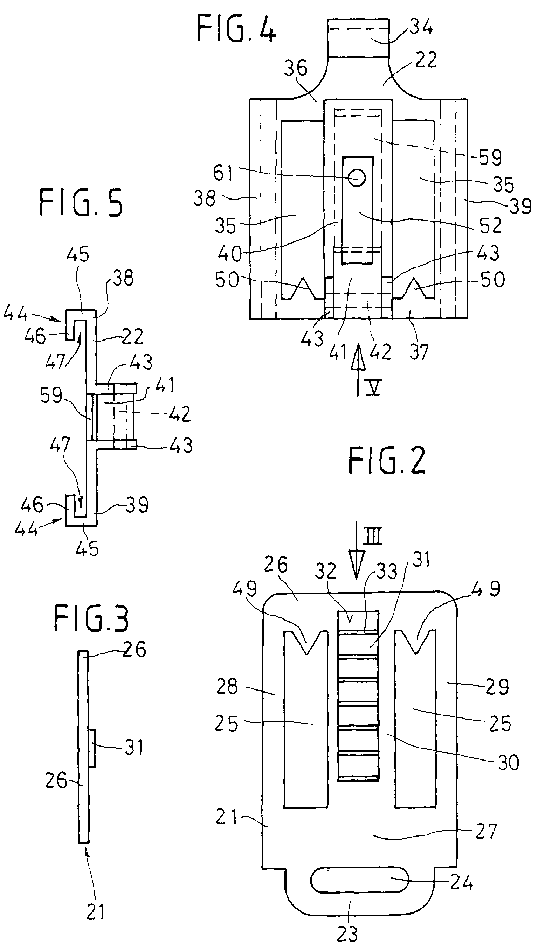

Die Fig. 2 bis 5 zeigen die wesentlichen Elemente der erfindungsgemäßen Vorrichtung 10 in auseinander gebautem Zustand.

Fig. 2 zeigt das erste Teil 21, welches der Verbindung mit dem Endbereich 60 der Fahrzeug-Sicherheitseinrichtung 11 dient. Beispielsweise könnte das erste Teil 21 direkt mit dem Endbereich 60 der unteren Kante 13 des in Fig. 1 dargestellten Sicherheitsnetzes 11 oder aber auch mit einem Gurtansatz 20 gemäß Fig. 1 verbunden werden.

Das gemäß Fig. 4 dargestellte Teil 22 dient der Verbindung mit dem fahrzeugseitigen Befestigungspunkt 19, beispielsweise mit einer nicht dargestellten Öse.

Das erste Teil 21 gemäß Fig. 2 ist im wesentlichen flach als Platte ausgebildet. Es umfaßt ein Befestigungselement 23, welches nach Art eines Griffes bezüglich Fig. 2 nach unten vorsteht. In einer Befestigungsnehmung 24 kann beispielsweise der in Fig. 1 dargestellte Gurtansatz 20 eines Zugmittels angeordnet werden. Die dargestellte Anordnung von Befestigungselementen 23 und Befestigungsausnehmung 24 ist jedoch lediglich beispielhaft anzusehen. Die Verbindung des Endbereiches 60 der Fahrzeug-Sicherheitseinrichtung mit dem ersten Teil 21 kann auf jede beliebige Art und Weise erfolgen, auch mittelbar, z.B. über einen Gurtansatz, oder unmittelbar.

In dem ersten Teil 21 sind zwei langgestreckte Ausnehmungen 25 angeordnet. Die Ausnehmungen können beispielsweise durch Freischneiden oder Stanzen hergestellt werden, so daß in dem ersten Teil 1 ein oberer, bezüglich Fig. 2 horizontaler Abschnitt 26 sowie ein dazu im wesentlichen paralleler unterer Abschnitt 27, ein bezüglich Fig. 2 vertikal angeordneter linker Abschnitt 28 ein dazu wesentlich paralleler rechter Abschnitt 29 und ein zentraler, mittlerer Abschnitt 30 verbleibt.

Im Bereich des mittleren Abschnittes 30 ist eine Verzahnung 31 angeordnet, die sich bezüglich Fig. 2 aus der Papierebene heraus dem Betrachter entgegenerstreckt. Die Verzahnung 31 weist eine regelmäßige Anzahl von Zähnen, beim Ausführungsbeispiel sieben Zähne auf, die jeweils eine lange Flanke 32 und eine steile Flanke 33 aufweisen. Auf die Bedeutung der Flanken wird später im einzelnen eingegangen.

Das in Fig. 4 dargestellte zweite Teil 22 weist einen Befestigungsansatz 34 auf, der beim Ausführungsbeispiel hakenförmig ausgebildet ist und dem Eingriff in eine Ringöse dienen kann, die den fahrzeugseitigen Befestigungspunkt 19 gemäß Fig. 1 darstellt. Auch im zweiten Teil 23 sind zwei langgestreckte Ausnehmungen 35 vorgesehen, die ebenfalls nach Art von Freischnitten in dem zweiten Teil 22 angebracht sein können. Es verbleiben in dem zweiten Teil 22 in analoger Weise ein oberer gemäß Fig. 4 im wesentlichen horizontaler Abschnitt 36 sowie ein dazu paralleler unterer Abschnitt 37 und ein im wesentlichen vertikaler, linker Abschnitt 38, ein rechter Abschnitt 39 und ein mittlerer Abschnitt 40.

Im Bereich des mittleren Abschnittes 40 ist eine Sperrklinke 41 angeordnet, die auf später beschriebene Weise mit der Verzahnung 31 des ersten Teils 21 zusammen wirkt. Die Sperrklinke 41 ist schwenkbar am Lagerbolzen 42 gelagert, der seinerseits in Flanschen 43 gehalten ist, die einstückig stoffschlüssig mit dem mittleren Abschnitt 40 bzw. dem unteren Abschnitt 37 des zweiten Teils 22 verbunden sind.

Wie sich insbesondere aus Fig. 5 ergibt, sind im Bereich des linken Abschnitts 38 und des rechten Abschnitts 39 des zweiten Teils 22 Führungsmittel 44 angeordnet. Diese Führungsmittel werden z.B. durch Umbiegen der Randbereiche erreicht, so daß mittels Seitenwänden 45 und Bodenwänden 46 jeweils eine Nut 47 gebildet wird.

Im zusammengebauten Zustand greift das erste Teil 21 mit seinen Randabschnitten 28 und 29 derart in die Nuten 47 ein, daß das erste Teil 21 innerhalb des zweiten Teils 22 verschiebbar aufgenommen ist. Die Nutanordnung der Führungsmittel 44 bildet auf diese Weise eine Schienen-Führung für das erste Teil 21 innerhalb des zweiten Teiles 22.

Wie sich insbesondere aus Fig. 3 ergibt, steht die Verzahnung 31 bezüglich Fig.3 nach rechts ein wenig vor. Dafür befindet sich am zweiten Teil 22 ein Führungskanal 59, der die Verzahnung 31 aufnimmt, so daß sich die Verzahnung 31 in dem Führungskanal 59 bewegen kann.

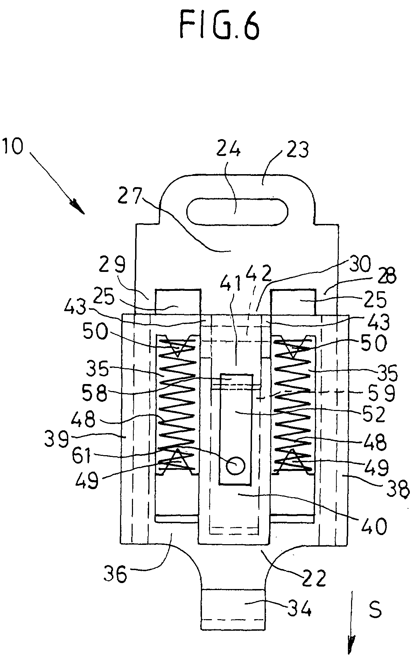

Fig. 6 zeigt die Vorrichtung 10 in zusammengebauten Zustand. Es sei jedoch darauf hingewiesen, daß das Betätigungsglied 51 hier der Übersicht halber nicht dargestellt ist.

Fig. 6 zeigt, daß im zusammengebauten Zustand von erstem Teil 21 und zweitem Teil 22 Federelemente 48 in den Ausnehmungen 25 bzw. 35 angeordnet sind. Gemäß Fig. 6 sind die Federelemente 48 in paariger Anordnung dargestellt. Jedes Federelement 48 ist eine Druckfeder, die sich mit ihrem einen Ende auf einen Halterungsansatz 49 abstützt, der dem zweiten Teil 22 zugeordnet ist und mit ihrem gegenüberliegendem Ende auf einen Halterungsansatz 50 abstützt, der dem ersten Teil 21 zugeordnet ist.

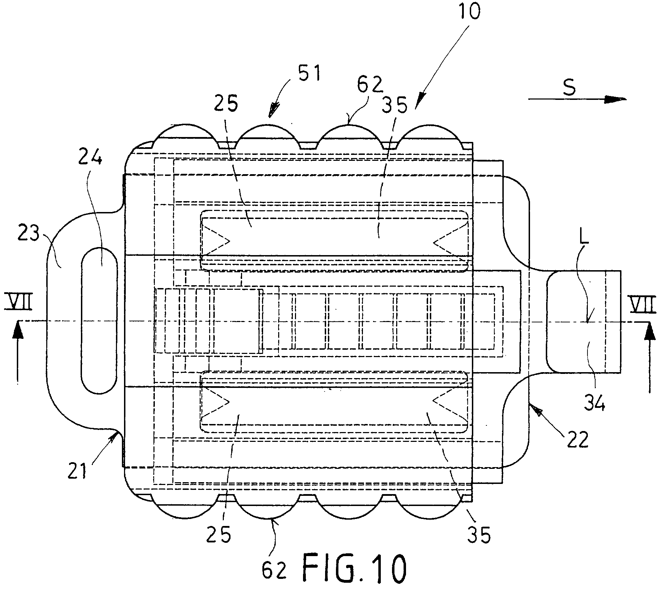

Die Fig. 10 zeigt die erfindungsgemäße Vorrichtung 10 schematisch in einer ähnlichen Darstellung wie Fig. 6. Hier ist zusätzlich noch das Betätigungsglied 51 dargestellt, wohingegen die Federelemente 48 weggelassen worden sind.

Das Betätigungsglied 51 ist relativ zu dem zweiten Teil 22 verschiebbar angeordnet. Das Betätigungsglied 51 umfaßt insbesondere Angriffsflächen 62 für einen einfachen, komfortablen Angriff durch einen Benutzer. Das Betätigungsglied 51 umgreift dabei das erste Teil 21 und das zweite Teil 22 gemeinsam.

Auch Fig. 10 läßt erkennen, daß die gesamte Vorrichtung 10 entlang einer Längsmittelachse L spiegelsymmetrisch aufgebaut ist.

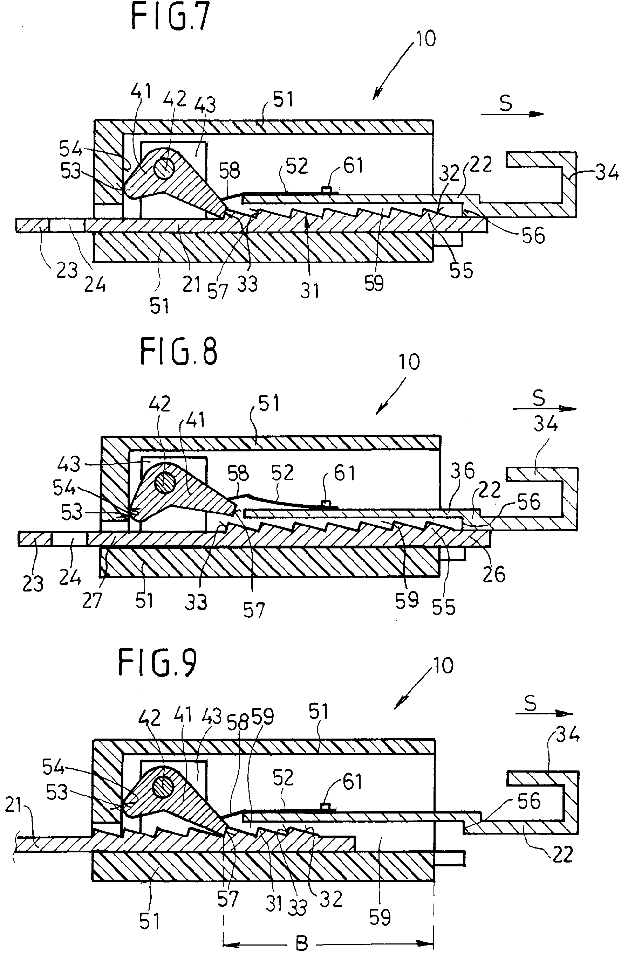

Anhand der Fig. 7-9 soll nun die Funktionsweise der erfindungsgemäßen Vorrichtung erläutert werden:

Das erste Teil 21 ist relativ zu dem zweiten Teil 22 auf Grund der Schienen-Führungs-Anordnung verschiebbar gelagert. Fig. 7 zeigt das erste Teil 21 in einer Position, in der es nahezu maximal in das zweite Teil 22 hinein eingefahren ist, nämlich in einer Position, in der die lange Flanke 32 des bezüglich Fig. 7 äußerst rechten Zahns 55 einen Eckbereich 56 des zweiten Teils 22 nahezu berührt.

Die Sperrklinke 41 befindet sich in ihrer Sperrstellung, d.h. sie liegt mit ihrer Sperrfläche 57 an einer steilen Flanke 33 der Verzahnung 31 an.

Eine Blattfeder 52 liegt mit ihrem freien Ende 58 an der Sperrklinke 41 an, und belastet die Sperrklinke 51 in ihre Sperrstellung hinein. Die Blattfeder 52 kann beispielsweise mittels einer Befestigungsnut 61 an dem zentralen Abschnitt 40 des zweiten Teils befestigt sein.

Fig. 7 zeigt das erste Teil 21 nahe seiner Ruheposition. Auch in diesem Zustand ist das Federelement 48 bereits gespannt und versucht das erste Teil 21 relativ zu dem zweiten Teil 22 bezüglich Fig. 7 weiter nach rechts zu versetzen. Da hier die Flanke 32 des äußerst rechten Zahnes 45 jedoch nahezu an dem Eckbereich 56 des zweiten Teiles 22 anliegt, ist eine Bewegung des ersten Teils 21 bezüglich Fig. 7 nach rechts fast nicht mehr möglich.

Das Betätigungsglied 21 kann ausgehend von einer Position gemäß Fig. 7 nach rechts in eine Position gemäß Fig. 8 verschoben werden. Da in seiner in Fig. 7 dargestellten Position das Betätigungsglied 51 bereits mit seiner Wirkfläche 54 an einer entsprechenden Betätigungsfläche 53 der Sperrklinke 51 anliegt, führt die Verlagerung des Betätigungsgliedes 51 zu einer Verschwenkung der Sperrklinke 41 entgegen dem Uhrzeigersinn. Durch diese Verschwenkung der Sperrklinke 41 wird die Sperrklinke 41 aus der in Fig. 7 dargestellten Sperrstellung in die in Fig. 8 dargestellte Löseposition verlagert. In der Löseposition sind die steilen Flanken 33 der Verzahnung 31 nicht in Eingriff mit den Sperrflächen 57 der Sperrklinke 41.

Ausgehend von einer Position gemäß Fig. 8 ist nunmehr eine Bewegung des ersten Teils 21 relativ zu dem zweiten Teil 22 möglich, da sich das aus Verzahnung 31 und Sperrklinke 41 zusammenstehende Formrichtgesperre in seiner Freilaufstellung befindet.

Es sei bereits jetzt darauf hingewiesen, daß bei der in Lösestellung befindlichen Sperrklinke 41 gemäß Fig. 8 die Blattfeder 52 gespannt wird und bestrebt ist, die Sperrklinke 41 in ihre Sperrstellung gemäß Fig. 7 zurückzuversetzen.

Wie sich insbesondere aus Fig. 9 ergibt, kann das erste Teil 21 relativ zu dem zweiten Teil 22 nur entlang einer begrenzten Strecke B bewegt werden. Im wesentlichen wird diese Strecke einerseits begrenzt durch den Eckbereich 56 des zweiten Teils 22, an den, wie zuvor beschrieben, eine Flanke 32 des äußerst rechten Zahnes 55 anstoßen kann. In der anderen Richtung wird die begrenzte Strecke B dadurch begrenzt, daß die steile Flanke 33 des äußerst rechten Zahnes 55 an der Sperrfläche 57 der Sperrklinke 41 anliegt. Sollte eine Relativbewegung des ersten Teils 21 zu dem zweiten Teil 22 über diese begrenzte Strecke B hinaus erfolgen, so ist hier eine sichere Straffung nicht mehr gewährleistet. Grundsätzlich ist es jedoch möglich, die Länge der Verzahnung 31 in Sperrichtung S beliebig vorzusehen.

Unter Bezug auf die Fig.1 wird nun beschrieben, wie ein Benutzer konkret vorgeht, um eine Fahrzeug-Sicherheitseinrichtung also beispielsweise das in Fig. 1 dargestellte Sicherheitsnetz 11 festzulegen und zu spannen: Ein Benutzer kann das in Fig. 7 dargestellte Betätigungsglied 51 ergreifen und das Betätigungsglied 51 in Spannrichtung S hin zu dem fahrzeugseitigen Befestigungspunkt 19 bewegen. Die Anordnung sollte dabei derart getroffen sein, daß der Abstand zwischen dem fahrtzeugseitigen Befestigungspunkt 19 und dem Endbereich 60 der Fahrzeug-Sicherheitseinrichtung 11 in maximal ausgefahrenen Zustand derselben derart getroffen ist, daß eine Verschiebung des Betätigungsgliedes 51 relativ zu dem zweiten Teil 22 der Vorrichtung 10 notwendig ist, um mit dem Befestigungsansatz 34 den fahrzeugseitigen Befestigungspunkt 19 überhaupt erreichen zu können. Mit anderen Worten kann der Befestigungsansatz 34 des zweiten Teils 22 ohne Kraftausübung durch den Benutzer in Spannrichtung S, also hin zu dem fahrzeugseitigen Befestigungspunkt 19, letzteren nicht erreichen.

Durch Kraftausübung des Benutzers auf das Betätigungsglied 51 in Spannrichtung S wird ausgehend von Fig. 7 die Sperrklinke 41 zunächst in ihre Lösestellung versetzt. Bei fortwährender Kraftausübung des Benutzers auf das Betätigungsglied 51 in Spannrichtung S führt diese nunmehr dazu, daß das Betätigungsglied 51 die Sperrklinke 41 und somit das gesamte zweite Teil 22 relativ zu dem ersten Teil 21 mitnimmt, so daß eine Bewegung des zweiten Teils 22 relativ zu dem ersten Teil 21 erfolgt. Wie insbesondere bei Betrachtung der Fig. 6 deutlich wird, führt eine derartige Bewegung des zweiten Teils 22 relativ zu dem ersten Teil 21 zu einer Spannung, d.h. Aufladung der als Druckfedern ausgebildeten Federelemente 48. Auf diese Weise führt ein fortwährender Zug an dem Betätigungsglied 51 in Spannrichtung S zu einer Aufladung der Federelemente 48, deren Rückstellkraft später zum nachfolgenden Spannen der Fahrzeug-Sicherheitseinrichtung 11 verwendet wird.

Fig. 9 zeigt einen Zustand der Vorrichtung 10, in dem eine relative Verlagerung des ersten Teils 21 bezüglich des zweiten Teils 22 derart stattgefunden hat, daß die Federelemente 48 gespannt sind. Nach Beendigung der Kraftausübung durch den Benutzer auf das Betätigungsglied 51 bewegt sich dieses in seine in Fig. 7 dargestellte Ruheposition zurück. Beim Ausführungsbeispiel wird dies dadurch erreicht, daß die Blattfeder 52 durch Kraftausübung auf die Sperrklinke 41 mit dafür sorgt, daß nicht nur die Sperrklinke 41 in ihre Sperrstellung gemäß Fig. 7 hin federbelastet wird, sondern daß automatisch dadurch auch das Betätigungsglied 51 in seine Ruheposition verlagert wird. Es kann grundsätzlich auch daran gedacht werden, zwischen dem Betätigungsglied 51 und dem zweiten Teil 22 eine nicht dargestelltes zusätzliches Federelement vorzusehen, welches für eine Rückstellung des Betätigungsgliedes 51 sorgt.

In der in Fig. 9 dargestellten Position befindet sich die Sperrklinke 41 in Sperrstellung und verhindert sicher eine Bewegung des ersten Teils 21 bezüglich Fig. 9 nach links relativ zu dem zweiten Teil 22. Dies bedeutet, daß im Falle eines Unfalls oder eines Crashs eine Ausbeulung des Fahrzeug-Sicherheitsnetzes 11 durch in dieses hineinstürzende Gegenstände ausgeschlossen ist, da sich das erste Teil 21 zu dem fahrzeugseitig festgelegten zweiten Teil 22 nicht relativ bewegen kann.

Die in Fig. 9 dargestellte Position des ersten Teils 21 relativ zu dem zweiten Teil 22 impliziert jedoch einen gespannten Zustand der Federelemente 48. Diese sind ständig dahin bestrebt, daß erste Teil 21 relativ zu dem zweiten Teil 22 bezüglich Fig. 9 nach rechts zu verlagern, und somit fortlaufend eine weitere Straffung der Fahrzeug-Sicherheitseinrichtung 11 zu erreichen. Dies ist beispielsweise vorteilhaft, wenn eine nach Befestigung der Fahrzeug-Sicherheitseinrichtung 11 auftretende Schlaffheit in der Werkstoffbahn ausgeglichen werden soll. Dies ist insbesondere vorteilhaft bei Fahrzeug-Sicherheitseinrichtungen, die um einen festzulegenden Gegenstand herum gespannt werden, der sich während der Fahrt beispielsweise verlagert, wodurch eine gewisse Schlaffheit auftritt.

Fig. 9 zeigt das erste Teil 21 in einer Arbeitsposition. Dies ist zwar nicht die Arbeitsposition, die einen maximalen Abstand zwischen fahrzeugseitigem Befestigungspunkt 19 und dem Endbereich 60 des Sicherheitsnetzes 11 bereitstellt. Es handelt sich hier jedoch um eine Arbeitsposition des ersten Teils 21, in der das erste Teil 21 in seine Ruheposition hinein etwa gemäß Fig. 7 federbelastet ist.

Eine Arbeitsposition mit maximalen Abstand zwischen fahrzeugseitigem Befestigungspunkt 19 und Endbereich 60 würde dann erreicht, wenn die steile Flanke 33 des äußerst rechten Zahns 55 an der Sperrfläche 57 der Sperrklinke 41 anliegt.

Zum Lösen der erfindungsgemäßen Vorrichtung 10 betätigt der Benutzer das Betätigungsglied 51 wiederum in Sperrichtung S. Auf diese Weise wird die Sperrklinke 41 verschwenkt, erreicht ihre Löseposition und ermöglicht eine Bewegung des ersten Teils 21 relativ zum Zweiten Teil 22. Anschließend kann das Befestigungsende 34 aus der nicht dargestellten Befestigungsöse ausgehängt werden.

Die erfindungsgemäße Vorrichtung dient zunächst dem Festlegen eines Endbereichs 60 einer Fahrzeug-Sicherheitseinrichtung 11 an einem fahrzeugseitigen Befestigungspunkt 19. Sie erfüllt höchste Sicherheitsanforderungen, auch im Falle eines Crashs, weil nach dem Festlegen eine Verlagerung des ersten Teils 21 relativ zu dem zweiten Teil 22 ausgeschlossen ist, der Abstand zwischen dem Endbereich 60 der Sicherheitseinrichtung 11 und dem fahrzeugseitigen Befestigungspunkt 19 somit nicht vergrößert werden kann. Gleichzeitig gewährleistet sie eine ständige Straffung der Fahrzeug-Sicherheitseinrichtung 11, weil die Ratschenanordnung in Form des Formrichtgesperres in Verbindung mit den Federelementen 48 eine ständige Zugkraft ausübt. Letztlich ist die Vorrichtung aber auch komfortabel bedienbar, da ein Benutzer lediglich das Betätigungsglied 51 ergreifen muß und so eine einhändige Bewegung zum Festlegen möglich ist.

Grundsätzlich ist es auch möglich statt der in Fig. 6 dargestellten Federelemente 48, die als Druckfeder ausgebildet sind, zwischen dem ersten Teil 21 und dem zweiten Teil 22 eine Zugfeder anzuordnen, die jedoch gleichermaßen für eine Rückstellung des ersten Teils 21 relativ zu dem zweiten Teil 22 in die Ruheposition des ersten Teils 21 sorgt.

## Patentansprüche

1. Vorrichtung (10) zur Festlegung eines Endbereiches (60) einer Fahrzeug-Sicherheitseinrichtung (11) an einem fahrzeugseitigen Befestigungspunkt (19), sowie zur Spannung des Endbereiches (60) der Fahrzeug-Sicherheitseinrichtung (11) relativ zu dem Befestigungspunkt (19), mit einem ersten Teil (21) zur Verbindung mit der Fahrzeug-Sicherheitseinrichtung (11), und einem zweiten Teil (22) zur Verbindung mit dem Befestigungspunkt (19), wobei das erste Teil (21) relativ zu dem zweiten Teil (22) entlang einer begrenzten Strecke (B) zwischen einer Ruheposition und einer Arbeitsposition verschiebbar angeordnet ist, wobei die Ruheposition des ersten Teils einem minimalen Abstand und die Arbeitsposition des ersten Teils einem maximalen Abstand zwischen Endbereich (60) und Befestigungspunkt (19) entspricht, wobei zwischen dem ersten Teil (21) und dem zweiten Teil (22) wenigstens ein Federelement (48) angeordnet ist, welches das erste Teil (21) in dessen Ruheposition hin belastet, **dadurch gekennzeichnet, daß** zwischen dem ersten Teil (21) und dem zweiten Teil (22) ein Formrichtgesperre (31,41) angeordnet ist, welches mittels eines in Spannrichtung (S) relativ zu dem zweiten Teil (22) bewegbaren Betätigungsgliedes (51) in seine Freilaufstellung versetzbar ist.

2. Vorrichtung nach Anspruch 1, **dadurch gekennzeichnet, daß** das Betätigungsglied (51) an dem zweiten Teil (22) verlagerbar angeordnet ist.

3. Vorrichtung nach Anspruch 1 oder 2, **dadurch gekennzeichnet, daß** das Betätigungsglied (51) relativ zu dem zweiten Teil (22) federbelastet ist.

4. Vorrichtung nach einem der vorgegangenen Ansprüche, **dadurch gekennzeichnet, daß** Führungsmittel (44, 45, 46, 47) für eine geführte Bewegung des ersten Teils (21) relativ zu dem zweiten Teil (22) vorgesehen sind.

5. Vorrichtung nach Anspruch 4, **dadurch gekennzeichnet, daß** die Führungsmittel (44, 45, 46, 47, 48) Führungsnuten (47) umfassen.

6. Vorrichtung nach einem der vorangegangenen Ansprüche, **dadurch gekennzeichnet, daß** das Formrichtgesperre (11, 41) eine Verzahnung (31) und eine Sperrklinke (41) zum Eingriff in eine Verzahnung (31) umfasst.

7. Vorrichtung nach Anspruch 6, **dadurch gekennzeichnet, daß** die Sperrklinke (41) schwenkbar an dem zweiten Teil (22) angeordnet ist.

8. Vorrichtung nach Anspruch 6 oder 7, **dadurch gekennzeichnet, daß** die Sperrklinke (41) eine Betätigungsfläche (53) aufweist, mittels der die Sperrklinke (41) von dem Betätigungsglied (51) verschwenkbar ist.

9. Vorrichtung nach einem der Ansprüche 6 bis 8, **dadurch gekennzeichnet, daß** die Sperrklinke (41) in ihre Sperrstellung hinein federbelastet ist.

10. Vorrichtung nach einem der vorangegangenen Ansprüche, **dadurch gekennzeichnet, daß** das erste Teil (21) bzw. das zweite Teil (22) jeweils wenigstens eine Ausnehmung (25, 35) für den Einsatz eines Federelementes (48) aufweist.

11. Vorrichtung nach einem der vorangegangenen Ansprüche, **dadurch gekennzeichnet, daß** die Vorrichtung entlang einer Längsmittelachse (L) im wesentlichen spiegelsymmetrisch ausgebildet ist und zwei Federelemente (48) aufweist.
